# EUROPEAN PATENT APPLICATION

(11) **EP 1 980 604 A1**
(43) Date of publication of application: **15.10.2008**
(21) Application number: 07006901.8
(22) Date of filing: 03.04.2007
(51) Int. Cl.: C09K 8/506, C09K 8/60

(54) **Plugging of high permeability regions of subterranean formations**

(71) Applicant: MAERSK OLIE OG GAS A/S, 1263 Copenhagen K (DK)
(72) Inventor: Lundgaard, Thomas, DK-8200 Arhus N. (DK); Agerbaek, Mikkel,, DK-8600 Silkeborg (DK); Larsen, Jan,, DK-1300 Copenhagen K (DK)
(74) Representative: Benthin, Stig

(57) **Abstract**

A method of modifying the permeability of subterranean formations and, more specifically, to a method for reducing the water permeability of such formations. In particular, the invention concerns a method for plugging of natural or induced fractures in hydrocarbon producing field formations, especially in chalk reservoirs, by enzymatically induced calcium carbonate precipitation for reduction of production of water and other aqueous fluids from the subterranean formations.

## Description

### FIELD OF THE INVENTION

The present invention relates to a method of modifying the permeability of subterranean formations and, more specifically, to a method for reducing the water permeability of such formations. In particular, the invention concerns a method for plugging of natural or induced fractures in hydrocarbon producing field formations, especially in chalk reservoirs, by enzymatically induced calcium carbonate precipitation for reduction of production of water and other aqueous fluids from the subterranean formations.

### BACKGROUND OF THE INVENTION

Hydrocarbons (e.g. oil and gas) are generally recovered from subterranean formations by drilling a well bore into the formation and extracting the hydrocarbon.

Factors which influence the rate of hydrocarbon production and therefore the productivity of the well are i.a. the pressure in the formation and the ratio of hydrocarbon to water which is produced from the formation.

The production of water and other aqueous fluids from the subterranean formations is a common phenomenon, particularly with mature wells and a certain level of water production is in fact necessary for the efficient extraction of hydrocarbon. The water produced may be, for example, water that is injected into the well or especially through a second water injector well at a distance from the producing well to facilitate recovery of the hydrocarbon.

As the hydrocarbons are extracted from a formation, water and aqueous fluids tend to move through the pore system in the formation and into the well bore where they are produced along with the hydrocarbon.

It is known that excessive production of water and other aqueous fluids (i.e. the production of more water and/or aqueous fluids than is necessary for efficient production of hydrocarbon) from wells causes a number of problems such as a reduction in the rate of hydrocarbon production and scaling of downhole equipment (e.g. pipelines, valves, sand screens, etc.) as well as surface facilities and furthermore that repair or replacement of such equipment can only be carried out during periods of shut-down in production which has a significant economic impact on the production process. Excessive production of water further increases the cost of recovering the hydrocarbon in a form suitable for transportation and/or further refining. In particular, the over-production of water necessitates the use of expensive equipment to separate the water and other aqueous fluids from the hydrocarbon. The costs associated with disposal of produced water in an environmentally safe, manner causes further economic drawbacks.

Typically, in hydrocarbon-producing formations the amount of water produced increases over the lifetime of the well and eventually a point is reached at which the cost of handling the volume of water produced during hydrocarbon production becomes greater than the value of the hydrocarbon recovered. At this point, the well bore may be described as "watered-out" (*i.e.* it essentially becomes uneconomical to work). Thus, although hydrocarbon material may still remain in a "watered-out" well reservoir zone, it can no longer be extracted economically.

A number of methods for controlling water production from subterranean formations have been proposed. These include processes designed to block pores or channels within a formation by, for example, gelation using polymer materials such as polyvinyl alcohol and polyacrylic acid. Another method that has been proposed involves introducing a barrier, such as a concrete resin, adjacent to the well bore in order to prevent the movement of water into the bore. Such treatments can in some cases provide a desired level of water control by effectively blocking water producing channels and pores. These methods are not, however, selective to water producing channels and also tend to block those channels and pores facilitating hydrocarbon production.

More recently, methods to achieve selective water control techniques have been proposed. These methods typically involve introducing a composition comprising a hydrophilic polymer (e.g. a polyacrylamide) into the formation. Whilst the size of the polymer impedes the movement of fluids (e.g. water) in the formation, it is thought that the hydrophilicity of the polymer affords the desired selectivity. More specifically, it is believed that the hydrophilic nature of the polymer materials causes these to preferentially partition into those channels and pores of the formation which contain high levels of water.

However, use of hydrophilic polymers such as polyacrylamides is not without its disadvantages. One drawback is that the polymers tend to have only limited retention time in the formation. Despite suggestions for improving their retention (e.g. the use of organosilicon compounds as disclosed in GB-A-2399364), it is still the case that formations often have to be re-treated with further polymer material after a relatively short period of time. It is also not uncommon for a reduction in hydrocarbon production to be associated with the use of such polymers since at least a proportion of these locate into primarily hydrocarbon-producing channels or pores thereby blocking the production of hydrocarbon (e.g. oil).
A further disadvantage associated with the use of polymer materials to control water production arises from the fact that they are often at-least partially unstable at high temperatures (e.g. greater than 110 °C) as well as in acids and heavy brines which are commonly used in hydrocarbon production. Exposure to such temperatures and/or chemicals can cause the polymers to decompose and/or degrade thereby nullifying their blocking effect. When this occurs, the formation then has to be re-treated thus further increasing costs. Moreover, polyacrylamide is potentially damaging to the environment (the acrylamide monomer produced on decomposition of polyacrylamide is a nerve toxin).

WO 2005/124099 provides a method of controlling water in a subterranean formation, said method comprising contacting said formation with a water control treatment agent which comprises an organosilane in an amount effective to reduce the water permeability of at least part of said formation. WO 2005/124099 further provides a method of plugging or sealing a subterranean formation.

WO 2005/124099 further discloses that enzyme systems are suitable for use in a method of sealing or plugging a water-rich (e.g. oil depleted) subterranean formation said method comprising contacting said formation with a water control treatment agent which comprises an enzyme and a substrate therefore in an amount effective to reduce the permeability of said formation. These systems comprise an enzyme and a substrate for the enzyme whereby the action of the enzyme on the substrate results in precipitation or deposition of a material which effectively impedes the flow of fluid through the formation. The material which is precipitated or deposited in the formation may be produced from a compound present in the rock formation prior to the introduction of the enzyme system. Alternatively, a suitable compound may be introduced into the well in addition to the enzyme and the substrate.

Suitable enzymes include those which remain active under the conditions (temperature, pressure, etc. ) found in the subterranean formation to be treated. Typically, these will be water soluble. A preferred enzyme is stated to be a urease (EC 3.5.1.5). This may be isolated from any plant, animal, bacterial or fungal source. Optionally, this may be chemically modified provided it retains its desired catalytic activity. Examples of suitable ureases include thermophilic or thermostable ureases, e.g. those isolated from Jack bean. Ureases suitable are stated to be commercially available from Sigma. A particularly preferred urease is Urease Canavalia ensiformis (Jack bean) available from Sigma under the Product No. U1500.

Suitable enzyme-substrate combinations are ureases in combination with urea which typically will be used together with an aqueous solution which on contact with the enzyme-substrate system is capable of forming a precipitate which plugs or seals the pore system of a formation. A suitable solution for use with urease/urea is an aqueous solution containing a salt of Ca, e.g. calcium chloride.

The action of urease on urea generates ammonia and CO₂. In an aquatic solution CO₂ is hydrated to carbonates (H₂CO₃, HCO₃⁻ and CO₃²⁻, depending on the pH). In contact with CaCl₂ the carbonates generate CaCO₃ In WO 2005/124099 it is stated that it is believed the calcium carbonate is effective in impeding fluid flow through the formation.

US patent No. 5,730,873 discloses a method for the time delayed precipitation of a solid phase of metal from a low pH, metal salt solution comprising adding to the metal solution a substrate, such as an amide, and an enzyme, such as an amidase, which will react with the substrate, which causes a rise in pH upon the reaction of the substrate with the enzyme. The rise in pH causes the metal to precipitate from solution. The precipitated metal is useful for emplacing metal hydroxides for providing sorptive material useful for removing contamination from groundwater.

It is disclosed that the substrate may be urea and that low pH iron solutions the source of urease may be Jack bean meal which seems to withstand mixing better than purified urease.

US patent no. 4,002,204 discloses a process in which a cationic emulsion containing asphalt and a pH-increasing reactant (that subsequently breaks the emulsion) is injected into a subterranean earth formation to plug the earth formation, and using as the pH-increasing reactant, a mixture consisting essentially of urea and urease.

In Journal of Canadian Petroleum Technology 2003, page 10, Nemati & Voordouw disclosed that biologically formed calcium carbonate may form a durable plugging for enhanced oil recovery. Purified urease enzyme and urease enzyme produced bacterially were tested in a reaction medium containing urea and calcium chloride dihydrate. It was found that the yield of enzymatically produced calcium carbonate was significantly higher than that produced bacterially.

There is thus a continuing need for alternative (e.g. improved) methods for controlling water flow in subterranean formations, especially during the production of hydrocarbon (e.g. oil) from a well and, in particular, for methods which are capable of reducing the volume of water produced during hydrocarbon recovery.

### SUMMARY OF THE INVENTION

### BRIEF DESCRIPTION OF THE DRAWINGS

The invention is disclosed more in detail with reference to the drawings:
Figure 1. Plug material formation performance at various reactant and enzyme levels. The three columns at each sample ID represents 2, 20 and 24 hours of reaction time. Legend protein refers to total amount of Jack bean meal.
Figure 2. Plug material formation performance at various reactant and enzyme levels. The four columns at each sample ID represents 3, 6, 12 and 24 hours of reaction time. Legend protein refers to total amount of Jack bean meal.
Figure 3. Setup with low pressure clamps mounted on a piece of limestone core sample. The schematics to the right show the design principle.
Figure 4. Setup for measurement of plugging performance. An upright cylindrical reservoir in the form of a tube containing water control treatment agent (10 mL) was connected to a 2 mm inner Ø steel tube at the lower end. The steel tube was bent forming a U-bend. The setup was designed in such a manner that the precipitated crystals would sediment in the lowest part of the tube, where the tube was bent, narrowing the opening to half the area.
Figure 5. Plug strength measurements on the test setup shown in figure 4, using CaCl₂·2H₂O (250 g/L), urea (110 g/L) and Jack bean meal (25 g/L) as the water control treatment agent (standard), and standard with bentonite (20 g/L) added, and standard wherein Jack bean meal has been sieved to contain large grains (>125 µm).
Figure 6. Representative size distribution of particles in water control agent of the following composition CaCl₂·2H₂O (250 g/L), urea (110 g/L) and Jack bean meal (25 g/L), as measured by laser diffraction.

### DETAILED DESCRIPTION

In one aspect the present invention provides a method of sealing or plugging of natural or induced fractures in subterranean formations using a water control treatment agent, which method comprises contacting said formation with the water control treatment agent which comprises an enzyme and a substrate therefore in an amount effective to reduce the permeability of said formation wherein the enzyme is introduced into the formation together with a substrate therefore, and wherein said enzyme is added as a meal of a plant of the family *Leguminosae (Fabaceae).*

The injection of water into oil reservoirs (water flooding) is common for enhanced oil recovery. When water is injected into a reservoir, flow is preferentially diverted into high permeability zones from which oil has already been recovered during primary production. The excessive production of water can be controlled by selective plugging of high permeability areas in the reservoir by adding a water control treatment agent containing an enzyme and a substrate therefore. The enzyme will react with the substrate to create a product. This product should be able to react with compounds present in the subterranean formation and/or the water control treatment agent to reduce the permeability, e.g. by precipitation of a compound.

In one embodiment said subterranean formation is a water-rich (e.g. oil depleted) subterranean formation.

In another embodiment said subterranean formation is a hydrocarbon producing field formation.

In another embodiment the water control agent further comprises a precipitating compound forming a sparingly soluble compound with the reaction product of the enzyme and the substrate.

Precipitating compounds could be metal salts such as the ones selected from one or more salts of the following metals: aluminium, barium, cadmium, calcium, chromium, cobalt, copper, iron, lead, magnesium, manganese, mercury, nickel, strontium, silver, tin, and/or zinc. These metals form sparingly soluble salts such as carbonates and hydroxides. A sparingly soluble compound would have a solubility constant *Kₛₚ* < 0,001 and/or a solubility of less than 50 g/L for instance less than 30 g/L or less than 10 g/L or less than 1 g/L or less than 100 mg/L.

In another embodiment, the water treatment agent is supplied as a solution or a suspension.

In one embodiment the source for the enzyme is soy bean meal and/or Jack bean meal. Both soy bean meal and Jack bean meal is a source for crude urease, and is a cost effective source for urease compared to purified urease.

In another embodiment the enzyme is selected from a urease (EC 3.5.1.5) or amidase (EC 3.5.1.4). The urease or amidase can be crude or purified.

The activity of urease should be above 1 unit/I water control treatment agent, and typically it is from about 1 to about 1,000,000 units/I or from about 500 to about 600,000 units/l or from about 1000 to about 300,000 units/l or from about 2000 to about 100,000 units/l or from about 5000 to about 40,000 units/l. When urease is used as the enzyme, the substrate for the enzyme is urea.

A suitable substrate is urea, as urease cleaves urea into ammonium and carbonate, and the carbonate is able to react with the calcium ions present especially in chalk rich reservoirs.

Chalk rich reservoirs often contain a source of calcium ions at near to saturation. However, additional metal salts selected from one or more salts of the following metals: aluminium, barium, cadmium, calcium, chromium, cobalt, copper, iron, lead, magnesium, manganese, mercury, nickel, strontium, silver, tin, and/or zinc, can be added in order to further improve the reduction of the permeability of said formation. The only prerequisite for the salt is that it should be at least partially soluble at the pH of the water control treatment agent, and able to precipitate as a salt for example as an carbonate or hydroxide.

In another embodiment the method is carried out at a temperature from 20 °C to the boiling point of the reaction mixture at the prevailing temperature and pressure at the reaction site.

In another embodiment the method is carried out at a gauge pressure of from 0 to 300 bar.

In another embodiment the water control treatment agent comprises a stabilising agent. Such stabilising agents could be proteins such as skim milk powder.

Inclusion of an enzyme stabilizing protein in the plugging fluid increases the plug material formation significantly. Even at a low concentration of 5 mg/L, it can increase the formation yield up to three times.

In another embodiment the pH of the water control treatment agent is adjusted to a pH in the range from 7 to 9, such as a pH from 7.5 to 8.5, e.g. a pH about 8.

In another embodiment the water control treatment agent comprises at least one additive to improve strength and structure of the plug. This could be one of more of the following: cationic-, anionic-, neutral polymers, fibres, microparticles, polymerised aluminium or surfactants. In another embodiment bentonite is added.

In one aspect the present invention provides a method of sealing or plugging of natural or induced fractures in subterranean formations using a water control treatment agent, which method comprises contacting said formation with the water control treatment agent which comprises an enzyme and a substrate therefore in an amount effective to reduce the permeability of said formation wherein the enzyme is introduced into the formation together with a substrate therefore, and wherein said enzyme is added as a meal of a plant of the family *Leguminosae (Fabaceae),* and wherein the water control treatment agent is essentially free of asphalt.

In one aspect the present invention provides a water control treatment agent comprising meal of a plant of the family *Leguminosae (Fabaceae),* and a substrate for urease.

In one embodiment the water control treatment agent further comprises a precipitating compound and/or an additive to improve strength and structure of the precipitate.

In another embodiment the water control treatment agent comprises Jack bean meal, urea and/or calcium chloride.

In another embodiment the water control treatment agent comprises Jack bean meal (30,000-50,000 units/L), urea (88-132 g/L), and/or CaCl₂·2H₂O (200-300 g/L) and/or bentonite (15-25 g/L).

As used herein, the term "permeability" refers to the capacity of a porous medium to transmit a fluid. It therefore provides a measure of the resistance of a formation to flow of a liquid (e.g. water and/or hydrocarbon) through the pores and channels forming its structure. Thus, "hydrocarbon permeability" means the capacity of a porous medium such as a subterranean formation to transmit hydrocarbon (e.g. oil) and "water permeability" means the corresponding capacity to transmit water.

The inventors have found that the specific urease enzyme type present in bean meal achieves an up to 50 % higher plug material formation compared to highly refined enzyme products.

Without wanting to be bound by this theory, it is believed that bean meal constitutes a fully functioning and better alternative to highly refined enzymes with added skim milk powder. This is due to the high content of urease in bean meal and natural stabilizing effect of the crude bean meal.

### EXAMPLES

### Example 1

### Enzymatic formation of CaCO₃

Formation of calcium carbonate was investigated using a solution of CaCl₂·2H₂O (150 g/L), urea (24 g/L), with and without stabiliser (skim milk powder)( 20 g/L) and a solution of enzyme solution of a type IX urease with 82,800 units/g extracted from Jack beans (1 g/L).

Three solutions were tested in acid washed glass tubes for 8 days, each tube containing reactants for precipitation of maximum 20 g CaCO₃ per litre when all urea was converted to carbonate.
*Solution A:* Urea (12 g/L), CaCl₂·2H₂O (30 g/L), stabilizer (4 g/L) and urease (15 mg/L)(1242 units/L)
*Solution B:* Urea (12 g/L), CaCl₂·2H₂O (30 g/L), stabilizer (4 g/L) and urease (10 mg/L)(828 units/L)
*Solution* C: Urea (12 g/L), CaCl₂·2H₂O (30 g/L), and urease (10 mg/L) (828 units/L)(without stabilizer).

The glass tubes were left to react at 25 °C without agitation and open to the atmosphere and samples were withdrawn at regular intervals. The sample glass tubes were centrifuged at 2.480 G for 10 minutes, the supernatant discharged, followed by drying of the tubes at 70 °C. The precipitate was analysed with regards to the weight loss due to acid soluble precipitate by weighing the dried precipitate before and after treatment with 36 % hydrochloric acid.

In all test solutions a white precipitate was formed in visible amounts after the first day. Analyses of the precipitates were performed after various times, and the results appear in Table 1.

**Table 1. Precipitate in gram and calcium content (gram CaCO₃) per litre plugging solution before and after acid dissolution of precipitate**

| **Reaction time** (hours) | *Solution A* | | *Solution B* | | *Solution C* | |
|---|---|---|---|---|---|---|
| | **precipitate** (g/L) | **Acid soluble calcium** (g/L) | **Precipitate** (g/L) | **Acid soluble calcium** (g/L) | **Precipitate** (g/L) | **Acid soluble calcium** (g/L) |
| 0 | 1.4 | 0.5 | 1.2 | 0.4 | 0.6 | 0.5 |
| 18 | 8.9 | 6.8 | 6.8 | 4.8 | 3.5 | 3.4 |
| 24 | 10.7 | 7.8 | 7.9 | 6.0 | 6.0 | 5.9 |
| 48 | 15.8 | 12.8 | 12.4 | 10.0 | 7.8 | 7.6 |
| 96 | 19.3 | 16.3 | 15.6 | 12.8 | 13.7 | 12.3 |
| 212 | 20.4 | 16.3 | 19.9 | n.d. | 13 | 11.9 |

The precipitated amount increased continuously over the course of eight days and up to 80 % of the potential amount of calcium carbonate precipitated. It appears that the skim milk powder was co-precipitated with the calcium carbonate.

### Example 2

### Plugging of high permeability sand column

Plugging tests were carried out using a high permeability sand column with a height of 128 mm and a diameter of 29 mm having a total volume of 85 ml packed with acid washed and calcined sea sand (Merck) with grain sizes of 100-300 µm. The column had a porosity of 35 %. A tight packing was ensured by packing the sand as a thick slurry while tapping on the glass wall. The column was flushed with demineralized water and the hydraulic conductivity was measured both with constant and falling head method.

Plugging solution A (about three pore volumes) was injected into the sand column, which was subsequently clamped in both ends, and left to react. After 24 h, the sand column was flushed with demineralised water, and the hydraulic conductivity was measured. This procedure was repeated another two times with plugging solution A, with the only difference that plugging solution A in the third injection contained twice the amount of urease (30 mg/L). The results can be seen in Table 2.

**Table 2. Hydraulic conductivity measured using falling head and constant head methods after three injections with the water control treatment agent solution A.**

| **Reaction time** (hours) | | **Falling head** (m/sec) | **Relative change** K/K₀ | **Constant head** (m/sec) | **Relative change** K/K₀ | **Calculated mean permeability** (darcy) |
|---|---|---|---|---|---|---|
| 0 | Start | 1.5*10⁻⁴ | 100 % | 1.5*10⁻⁴ | 100% | 15.4 |
| 25 | 2. injection | 1.2*10⁻⁴ | 79% | 1.3*10⁻⁴ | 87 % | 12.8 |
| 49 | 3. injection | 1.1*10⁻⁴ | 73% | 1.1*10⁻⁴ | 77% | 11.6 |
| 74 | End | 9.4*10⁻⁵ | 63% | 8.4*10⁻⁵ | 57% | 9.3 |

The results show that the water control treatment agent *solution A* managed to reduce the hydraulic conductivity to 60 % of the initial value.

### Example 3

### Effect of stabilizer

Skim milk powder (Arla Foods, Viby, Denmark) is tested as a stabilizer for purified urease (Calzyme labs, CA, USA, 150,000 U/g) and compared to both purified urease without skim milk powder, and urease contained in jack bean meal (VWR International, Denmark, 1,700 U/g) without skim milk powder.

Water control treatment agents are prepared according to Table 3 in demineralised water, and the plug-material formation is measured as dry material after drying sediment at 70 °C after 10 minutes centrifugation at 2.480 G.

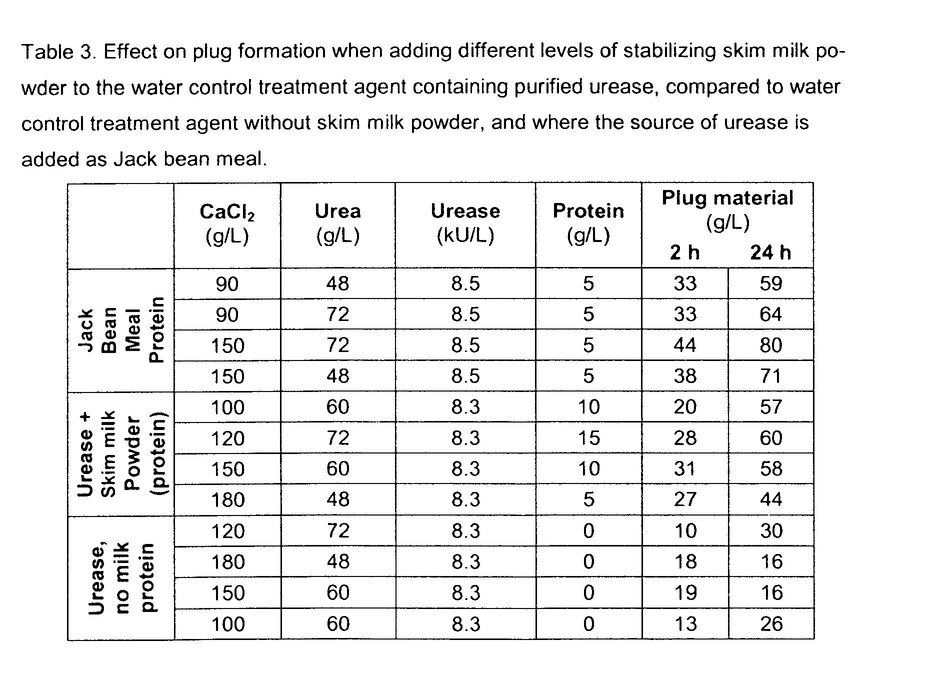

### Example 4

### Optimizing the water control treatment agent

The optimization of the water control agent has been pursued by testing the response of enzyme concentration, levels of calcium chloride and urea, as well as added enzyme stabilizer and reaction time.

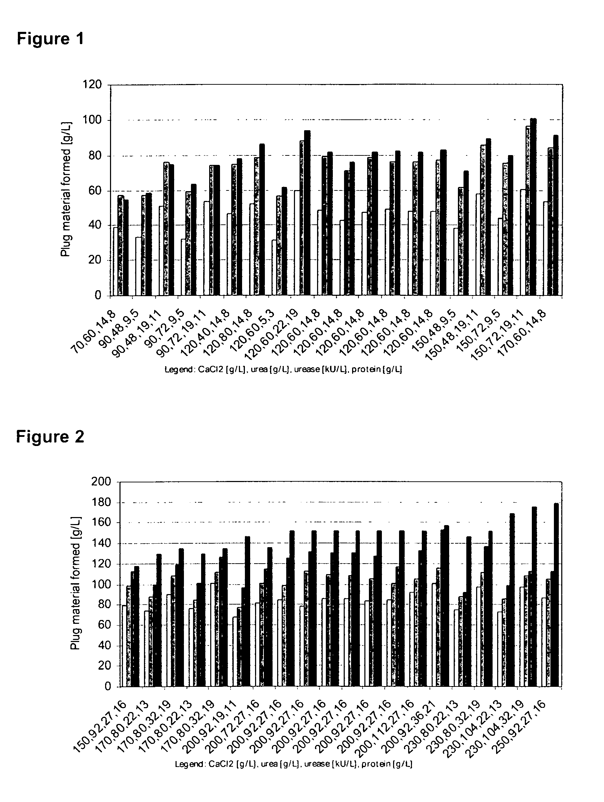

Water control treatment agents are prepared and analyzed according to example 3. The results are presented in figure 1.

Formation performance is drastically increased compared to example 1, and the reaction time for formation of precipitate has improved from 6-8 days to well below 24 hours.

The optimizations presented in figure 1 showed potential for further improvement of the reaction speed and the extent of the process. Consequently further optimization was pursued.

These results are presented in figure 2, that among other things show formation of plug material of more than 100 g/L after less than 12 hours, and where up to 180 g/L precipitate can be formed in the course of 24 hours. Furthermore 70 g/L precipitate or more is already present after 3 hours.

### Example 5

### Influence of pressure

The effect of static pressure on the water control treatment agent process is investigated to ensure that no inhibition of enzyme occurs when the pressure approaches reservoir conditions.

Pressure tests are performed by placing bulk reactors with water control treatment agents in a special nitrogen pressurized and temperature controlled reaction chamber. The water control treatment agent comprised: CaCl₂·2H₂O (250 g/L), urea (110 g/L) and Jack bean meal (5, 10 and 20 g/L).

Tests were performed at 25 °C at the following gauge pressures: 0, 55 and 115 bar, with a reaction time of 4 hours.

No indications of reduced formation were found at the elevated pressures examined. Reaction with 5, 10 and 20 g/L Jack bean meal gave respectively 40-45 g/L, 55-60 g/L and 90-100 g/L precipitate after 4 hours reaction.

### Example 6

### Influence of temperature and pressure

It was relevant to verify the function of the enzymatic process at temperatures at reservoir conditions. The combined effect of temperature and pressure was also investigated.

Temperature and pressure tests are performed by placing bulk reactors with water control treatment agents in a special nitrogen pressurized and temperature controlled reaction chamber. The water control treatment agent comprised: CaCl₂·2H₂O (250 g/L), urea (110 g/L) and Jack bean meal (20 g/L).

Tests were performed at 25 °C and 80 °C, with gauge pressures of 0 and 100 bar. Reaction time was 4 hours.

Increasing the temperature to 80 °C increased the precipitate yield with 30-40 %. At this temperature and at both 0 and 100 bar gauge pressure, a precipitate of 130-140 g/L was achieved.

### Example 7

### Plugging of limestone core samples

Preliminary fracture plugging in core samples of Halfdan limestone was conducted.

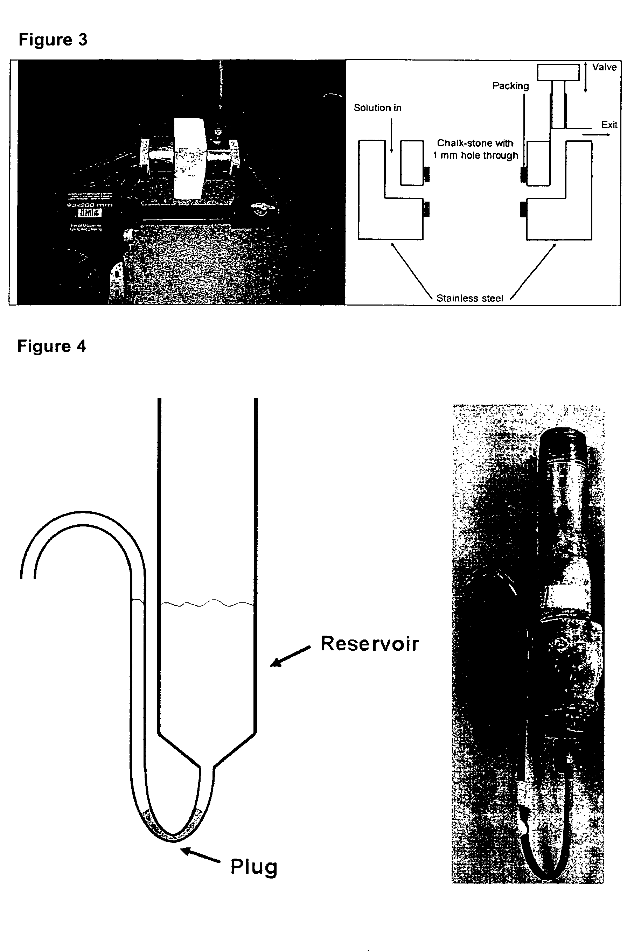

Low pressure clamps mounted on a specially cut and polished piece of Halfdan limestone core, with drilled holes in sizes from 1 to 2 mm, was used for the tests (figure 3). Nitrogen was used for transporting and pressurising the water control treatment agent.

The water control treatment agent comprised: CaCl₂·2H₂O (250 g/L), urea (110 g/L) and Jack bean meal (25 g/L).

The water control treatment agent was injected, and left to react for 24 hours to produce a plug that withstood gauge pressures of up to 2 bar.

### Example 8

### Test system to measure efficiency and strength of plugging

A test system for a model fracture was set up as depicted in figure 4. An upright cylindrical reservoir in the form of a tube containing water control treatment agent (10 mL) was connected to a 2 mm inner ⌀ steel tube at the lower end. The steel tube was bent forming a U-bend. The setup was designed in such a manner that the precipitated crystals would sediment in the lowest part of the tube, where the tube was bent, narrowing the opening to half the area. The position of the plug was confirmed by visual inspection after cutting of the tube.

Water control treatment agent (10 mL) was poured into the reservoir and left for 20 hours. Then, the remaining part of the reservoir was filled with water, and the system was observed for any flow through the plug as a measure of plug efficiency. A gradually increased pressure was then applied above the reservoir and the pressure required to force fluid through the system was used as a measure of plugging strength.

The majority of the experiments were conducted at room temperature (25 °C). Experiments conducted at elevated temperatures (40 °C and 70 °C) showed no temperature effect on plugging performance.

The efficiency of the plug is the observed flow through the plug compared to unhindered flow of water through the system. It was found that even weak plugs (resisting less than 0.1 bar gauge pressure) reduced the flow through the system by a factor of more than 100,000. No flow was observed through the more durable plugs.

It can be concluded that the precipitated calcium carbonate crystals forms a very efficient plug, completely stopping water flow.

### Example 9

### Strength of plugging

Using the model system described in example 8, the plug strength was evaluated using a water control treatment agent comprising: CaCl₂·2H₂O (250 g/L), urea (110 g/L) and Jack bean meal (25 g/L).
Repeated plug strength tests using this recipe showed a large natural variation ascribed to the randomness of the crystal precipitation and packing. In half of the measurements very weak plugs (<0.1 bar gauge pressure) were formed, in the other half the plugs were formed resisting gauge pressures of 1-3 bar. In order to use the plug strength test for comparative purposes it was necessary to make repeated measurements.

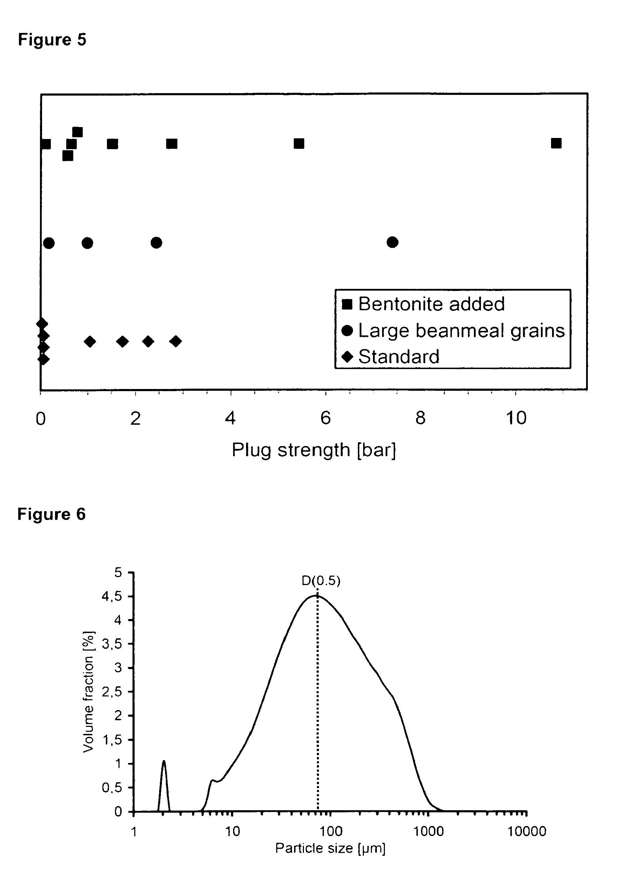

It is believed that the size of the precipitated crystals increases when crystallization initiators such as large Jack bean meal grains or bentonite crystals are present. To test this assumption, plug strength tests were conducted on water control treatment agents containing either large grains of Jack bean meal without bentonite or "regular" Jack bean meal with bentonite. The results are shown in figure 5.

Plugs prepared from agents containing crystal initiators also showed a large natural variation. However, eight replicate measurements showed that addition of bentonite (20 g/L) to the water control treatment agent increased the average plug strength from 1.0 to 2.8 bar gauge pressure.

### Example 10

### Measurement of particle size

The size of formed crystals is a parameter for plugging efficiency, since large particles are important for formation of durable plugs. Furthermore, the size distribution is expected to be of importance since a certain broadness of the distribution will favour the packing and blinding of the plug to an impermeable structure. Addition of polymers or other additives is expected to result in larger crystals and/or aggregates. The following parameters were varied:

**Table 4. Parameters varied in the pursuit of larger particle sizes.**

| **Varied parameter** | **Variations** |
|---|---|
| Temperature | 20 and 69 °C |
| Calcium chloride | -20 %; +20 %; +45 % |
| Urea | -20 %; +20 %; +80 % |
| Mg²⁺ addition | Mg²⁺:Ca²⁺ = 1:10; 1:100; 1:1000 |
| Fe²⁺ addition | Fe²⁺:Ca²⁺ = 1:10; 1:100; 1:1000 |
| Size separated Jack bean meal | 36-63 µm and >125 µm |
| Addition of crystallization initiator (bentonite) | +20 g/L |

The size distribution of the precipitated crystals was measured by laser diffraction using a Malvern Mastersizer X (long bench) equipped with a 1000 mm lens. Sampling was performed after dilution with demineralized water. Particles larger than 2 mm are not measurable with this laser diffraction. Since some of the samples contained larger crystal aggregates than 2 mm, the content of large aggregates (>1 mm) were quantified by screening the plugging fluid on a 1 mm sieve, flushing away smaller crystals and weak aggregates with demineralized water followed by drying and weighing the screenings.

Median particle size was measured, and size distribution was taken as the width of the distribution curve at half height. Figure 6 shows the size distribution of the water control treatment agent comprising: CaCl₂·2H₂O (250 g/L), urea (110 g/L) and Jack bean meal (25 g/L) after 20 h reaction at 69 °C. Subsequent optimizations use this "reference composition" as well as reaction time and temperature as the reference point. The results are shown in Table 4.

**Table 4. Parameters varied in the pursuit of larger particle sizes.**

| **Varied Parameter** | **Median size** (µm) | **Particle size range** (µm) | **Content of larger aggregates (>1 mm)** (g/L) |
|---|---|---|---|
| "Reference composition" | 72 | 20-480 | 2.3 |
| -20 % CaCl₂ | 200 | 70-900 | 14 |
| +20 % CaCl₂ | 90 | 55-190 | 1 |
| +45 % CaCl₂ | 70 | 35-175 | 5 |
| -20 % Urea | 225 | 105-700 | 15 |
| +20 % Urea | 130 | 30-550 | 21 |
| +80 % Urea | 70 | 40-110 | 3 |
| Mg²⁺:Ca²⁺ (1:1000) | 190 | 100-1000 | 21 |
| Mg²⁺:Ca²⁺ (1:100) | 200 | 50-800 | 15 |
| Mg²⁺:Ca²⁺ (1:10) | 100 | 20-650 | 4 |
| Fe²⁺:Ca²⁺(1.1000) | 60 | 20-115 | 1 |
| Fe²⁺:Ca²⁺ (1:100) | 62 | 30-110 | 0 |
| Fe²⁺:Ca²⁺(1:10) | 80 | 20-750 | 0.5 |
| Jack bean meal (36-63 µm) | 90 | 25-450 | 2 |
| Jack bean meal (>125 µm) | 580 | 400-1100 | 21 |
| +20 g/L Bentonite | 130 | 60-850 | 67 |

## Claims

1. A method of sealing or plugging of natural or induced fractures in subterranean formations using a water control treatment agent, which method comprises contacting said formation with the water control treatment agent which comprises an enzyme and a substrate therefore in an amount effective to reduce the permeability of said formation wherein the enzyme is introduced into the formation together with a substrate therefore, and wherein said enzyme is added as a meal of a plant of the family *Leguminosae (Fabaceae).*

2. The method according to claim 1, wherein the subterranean formation contains a precipitating compound forming a sparingly soluble compound with the reaction product of the enzyme and the substrate.

3. The method according to claim 1, wherein the plant is soy bean and/or Jack bean.

4. The method according to claim 1, wherein the enzyme is a urease.

5. The method according to anyone of claim 1-4, wherein the substrate for the enzyme is urea.

6. The method according to anyone of claim 1-5, wherein the water control agent further comprises a precipitating compound forming a sparingly soluble compound with the reaction product of the enzyme and the substrate.

7. The method according to anyone of claim 2 and 6, wherein the precipitating compound is a metal salt.

8. The method according to claim 7, wherein said metal salt is selected from one or more salts of the following metals: aluminium, barium, cadmium, calcium, chromium, cobalt, copper, iron, lead, magnesium, manganese, mercury, nickel, strontium, silver, tin and zinc.

9. The method according to anyone of claim 1-8, wherein the method is carried out at a temperature from 20 °C to the boiling point of the reaction mixture at the prevailing temperature and pressure at the reaction site.

10. The method according to anyone of claim 1-9, wherein the method is carried out at a gauge pressure of from 0 to 100 bar.

11. The method according to anyone of claim 1-10, wherein the water control treatment agent comprises a stabilising agent.

12. The method according to claim 11, wherein the stabilising agent is a protein.

13. The method according to anyone of claim 1-12, wherein the pH of the water control treatment agent is adjusted to a pH in the range from 7 to 9, such as a pH from 7.5 to 8.5, e.g. a pH about 8.

14. The method according to anyone of claim 1-13, wherein the water control treatment agent comprises at least one additive to improve strength and structure of the plug.

15. The method according to claim 14, wherein said at least one additive comprise one or more of the following: cationic-, anionic-, neutral polymers, fibres, microparticles, polymerised aluminium or surfactants.

16. The method according to claim 15, wherein said at least one additive comprise bentonite.

17. Method according to claim 1, wherein said subterranean formation is a hydrocarbon producing field formation.

18. Method according to claim 1, wherein said subterranean formation is a water-rich (e.g. oil depleted) subterranean formation.

19. Water control treatment agent comprising meal of a plant of the family *Leguminosae (Fabaceae),* and a substrate for urease.

20. Water control treatment agent according to claim 19 further comprising a precipitating compound and/or an additive to improve strength and structure of the precipitate.

21. Water control treatment agent according to anyone of claims 19-20, comprising Jack bean meal, urea and/or calcium chloride.

22. Water control treatment agent according to anyone of claims 19-21, comprising Jack bean meal (30,000-50,000 units/L), urea (88-132 g/L), and/or CaCl₂·2H₂O (200-300 g/L) and/or bentonite (15-25 g/L).
